# EUROPÄISCHE PATENTSCHRIFT

(11) **EP 0 979 188 B1**
(45) Veröffentlichungstag und Bekanntmachung des Hinweises auf die Patenterteilung: **19.11.2003**
(21) Anmeldenummer: 99917753.8
(22) Anmeldetag: 26.02.1999
(51) Int. Cl.: B60S 1/04

(54) **ROHRPLATINE**
BRACKET CONSISTING OF TUBES
PLAQUE TUBULAIRE

(30) Priorität: 27.02.1998 DE 19808137; 23.07.1998 DE 19833089
(43) Veröffentlichungstag der Anmeldung: 16.02.2000
(73) Patentinhaber: ROBERT BOSCH GMBH, 70442 Stuttgart (DE); Sander Umformtechnik GmbH & Co. KG, 77871 Renchen-Ulm (DE)
(72) Erfinder: BRÜMMER, Dietmar, D-77830 Bühlertal (DE); MÜHLPFORTE, Kurt, D-77815 Bühl (DE); DIETRICH, Jan, D-77815 Bühl (DE); ZEIBIG, Uwe, D-77855 Achern (DE)
(86) Internationale Anmeldenummer: DE9900516
(87) Internationale Veröffentlichungsnummer: WO99043519

(56) Entgegenhaltungen:
- EP-A- 0 497 645
- EP-A- 0 689 975
- DE-A- 19 712 113
- DE-U- 8 812 550

## Beschreibung

### Stand der Technik

Die Erfindung geht aus von einer Rohrplatine nach dem Oberbegriff des Anspruchs 1.

Wischeranlagen für Kraftfahrzeuge werden mit einem Wischerträger, einer sogenannten Platine bzw. Rohrplatine - wenn der Wischerträger auch aus Rohren besteht -, an der Karosserie eines Kraftfahrzeugs befestigt. Die Platine trägt einen Wischerantrieb mit einem Wischermotor und einem daran angebauten Getriebe, dessen Abtriebswelle in der Regel über eine Kurbel und Gelenkstangen Kurbeln antreibt, die mit einer Antriebswelle für jeden Scheibenwischer fest verbunden sind. Das Getriebegehäuse ist in der Regel mit drei Schrauben an einer Motorplatine angeschraubt, die von einem Platinenrohr gehalten wird. Die Schrauben greifen in vorstehende Schraubenstutzen eines abtriebsseitigen Gehäusedeckels ein, mit denen sich das Getriebegehäuse an der Motorplatine abstützt.

Die Antriebswelle des Scheibenwischers ist in einem Wischerlager gelagert, dessen Lagergehäuse an der Platine befestigt oder angeformt ist. Dieser ist unmittelbar über die Wischerlager oder über Befestigungsaugen, die am Wischerlager, an der Platine und/oder der Motorplatine angeformt sind, an einer Fahrzeugkarosserie befestigt.

Aus der DE-U-74 34 119.8 ist eine Rohrplatine bekannt, die aus einem Vierkantrohr hergestellt ist, an das eine als Motorplatine dienende Platte angeschweißt ist. Derartige Rohrplatinen oder Rohrrahmenanlagen sind trotz einer leichten Bauweise sehr stabil. Aus Kostengründen wird ein gerades Trägerrohr angestrebt, da kein Vorbiegearbeitsgang erforderlich ist.

Es ist ferner aus der EP-B-04 09 944 eine Rohrplatine bekannt, bei der eine Motorplatine rohrförmige Teile über formschlüssige Anschlüsse verbindet. Eine Variante zeigt, daß die Motorplatine mit einem Gehäusedeckel des Getriebegehäuses einstückig ausgebildet sein kann.

Die EP-A-0 781 691 zeigt eine Rohrplatine mit einer Motorplatine und einem Platinenrohr. An der Seite, die dem Platinenrohr zugewandt ist, besitzt die Motorplatine eine Vertiefung, in der das Platinenrohr eingebettet und mittels einer Buckelschweißung übereinander liegend verbunden ist. Die Querschnittkontur der Vertiefung entspricht der Querschnittkontur des Platinenrohrs und umfaßt das Platinenrohr in einem Umfangsbereich von ca. 180°. Da die Motorplatine somit nur auf einer Seite des Platinenrohrs über wenige Punkte mit dem Platinenrohr verbunden ist, werden die im Wischbetrieb auftretenden Kräfte ungünstig auf die Verbindung der beiden Bauteile verteilt, so daß örtlich hohe Materialbeanspruchungen entstehen.

Es ist ferner aus der EP-A-0 689 975 eine Rohrplatine mit einer Motorplatine bekannt. Diese besteht aus zwei spiegelbildlich gestalteten Teilen, die an der Seite zu einem Platinenrohr hin Vertiefungen aufweisen, in die das Platinenrohr eingebettet ist. Die Vertiefungen umgeben das Platinenrohr jeweils in einem Umfangsbereich von ca. 180°, so daß beide Vertiefungen zusammen das Platinenrohr auf dem gesamten Umfang umgeben. Bei der Montage werden beide Teile der Motorplatine um das Platinenrohr gelegt und miteinander verbunden, z.B. mechanisch oder durch Kleben oder durch eine thermische Verbindung. Dabei wird das Platinenrohr zur Motorplatine in Umfangsrichtung und in axialer Richtung formschlüssig und/oder durch Kleben stoffschlüssig fixiert. Die zwei Teile der Motorplatine können gemäß einer Ausgestaltung auch zu einem Stück vereinigt sein.

### Vorteile der Erfindung

Nach der Erfindung ist der Rand der Motorplatine im Bereich der Vertiefung und quer zu dieser in Lappen unterteilt, die wechselweise das Platinenrohr von der einen und der gegenüberliegenden Seite über einen Teilbereich des Umfangs umfassen. Dadurch werden die Kräfte, die im Wischbetrieb auftreten, über einen großen Umfangsbereich des Platinenrohrs verteilt und reine Biegespannungen teilweise in Zug- und Druckspannungen umgewandelt. Trotz der günstigen Krafteinleitung hat die Motorplatine einen einfachen Aufbau und besteht aus einem Stück, das keine Hinterschneidungen oder doppelwandige Bereiche besitzt, so daß es sowohl in Leichtmetall als auch in Kunststoff durch Druckguß oder Spritzguß herstellbar ist.

Die einzelnen Lappen sind im Vergleich zum gesamten Verbindungsbereich relativ schmal. Dadurch können sie einfach und kontrolliert durch Kleben oder Schweißen formschlüssig mit dem Platinenrohr verbunden werden. Hierbei ist es besonders vorteilhaft, die Motorplatine und das Platinenrohr mit einem Laserstrahl miteinander zu verschweißen, da durch dieses Schweißverfahren auch dünnwandige Werkstücke miteinander verbunden werden können, ohne die Werkstoffstruktur ungünstig zu verändern. Dünnwandige Bauteile haben ein geringes Gewicht. Sie können wegen der guten Krafteinleitung bei der erfindungsgemäßen Verbindung verwendet werden.

Um die Festigkeit zu erhöhen, ist es zweckmäßig, die Stoffschlußverbindung durch eine formschlüssige Verbindung zu unterstützen, indem z.B. das Platinenrohr und die entsprechende Vertiefung der Motorplatine einen vom Kreisquerschnitt abweichenden Querschnitt erhält. Zur Steigerung der Festigkeit sind ferner zwischen den Lappen Schlitze vorgesehen, deren Enden ausgerundet sind. Dadurch wird die Kerbspannung herabgesetzt. Spannungs- und Ermüdungsrisse werden in diesen Bereichen vermieden.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Draufsicht auf eine an einem Platinenrohr befestigte Motorplatine,
- Fig. 2: einen vergrößerten Schnitt entsprechend der Linie II-II in Fig. 1,
- Fig. 3: einen vergrößerten Schnitt entsprechend der Linie III-III in Fig. 1 und
- Fig. 4: eine Variante zu Fig. 3 mit einem polygonen Querschnittprofil des Platinenrohrs.

### Beschreibung der Ausführungsbeispiele

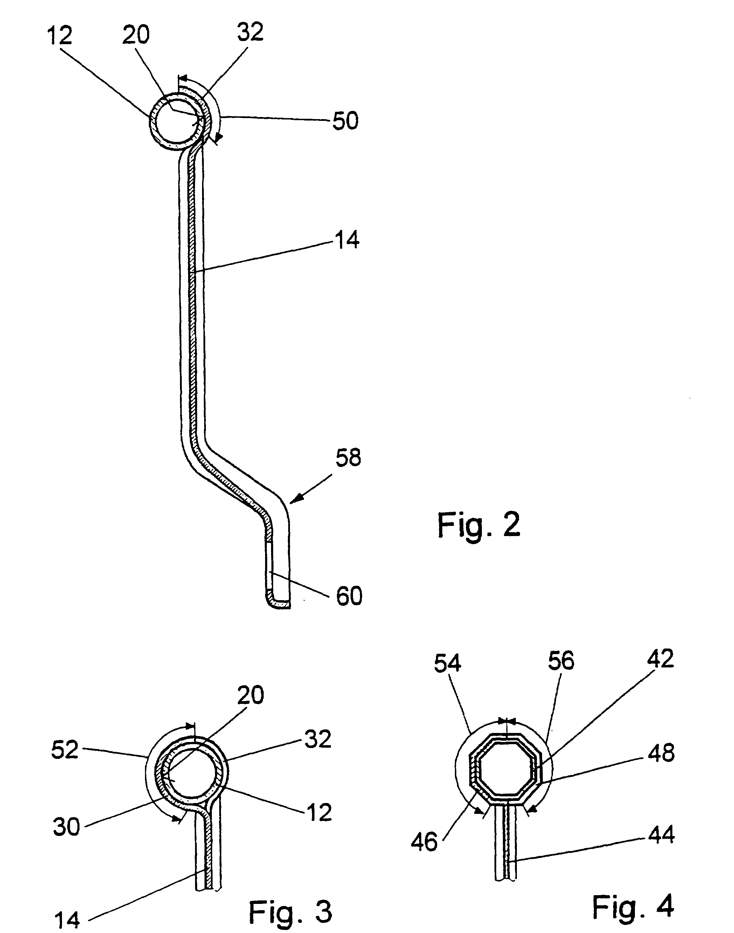

Eine Rohrplatine 10 umfaßt ein Platinenrohr 12 und eine Motorplatine 14. Diese besitzt eine Bohrung 16 zur Aufnahme eines nicht näher dargestellten Motors mit einem Getriebe, der durch Schrauben an der Motorplatine 14 befestigt wird. Hierzu dienen Schraubenlöcher 18. Die Motorplatine 14 ist ein Bauteil, das am Rand eine Versteifungsrippe 22 und im Bereich der Bohrung 16 und der Schraubenlöcher 18 eine Sicke 24 aufweist. Die Motorplatine 14 stützt sich über einen gekröpften Bereich 58 (Fig. 2) an einer nicht dargestellten Fahrzeugkarosserie ab. Zur Befestigung dienen Schrauben, die durch Langlöcher 60 der Motorplatine 14 gesteckt werden.

An der dem Platinenrohr 12 zugewandten Seite 26 hat die Motorplatine eine Vertiefung 20, in der das Platinenrohr 12 eingebettet und gehalten ist. Die Querschnittkontur der Vertiefung 20 entspricht der äußeren Querschnittkontur des Platinenrohrs 12.

Ausgehend von dem Rand der Motorplatine 14 an der Seite 26 ist die Motorplatine 14 im Bereich der Vertiefung 20 und quer zu dieser in Lappen 28, 30, 32 geteilt. Zwischen den Lappen 28 und 30 ist ein Schlitz 34 und zwischen den Lappen 30 und 32 ein Schlitz 36 vorgesehen. Die Schlitze 34 und 36 reichen ein Stück über die Vertiefung 20 hinaus und ihre Enden 38 bzw. 40 sind ausgerundet. Diese Maßnahmen verringern die Kerbspannung in diesen Bereichen.

Die Vertiefung 20 in dem Lappen 30 ist spiegelbildlich zu den Vertiefungen 20 in den Lappen 28 und 32 angeordnet, so daß das Platinenrohr 12 von den Lappen 28 und 32 von der einen Seite und von dem Lappen 30 von der anderen Seite umfaßt wird. Somit werden die Kräfte auf dem gesamten Umfang des Platinenrohrs 12 in das Platinenrohr 12 eingeleitet. Dieses kann insbesondere wegen des guten Kraftanschlusses dünnwandig gehalten werden.

Zweckmäßigerweise werden die Lappen 28, 30, 32 in Bereichen 50, 52 stoffschlüssig mit dem Platinenrohr 12 verbunden. Dies wird bei der erfindungsgemäßen Gestaltung dadurch erleichtert, daß die axiale Erstreckung der Lappen 28, 30, 32 relativ zur Gesamterstreckung des Befestigungsbereichs kurz ist, und die Lappen 28, 30, 32 sich nur über einen Teilbereich des Umfangs erstrecken. Dadurch ist die Fuge zwischen dem Lappen 28, 30, 32 und dem Platinenrohr 12 von den Seiten besser zugänglich, so daß sich sowohl eine Schweißverbindung als auch eine Klebeverbindung leichter herstellen und besser kontrollieren lassen.

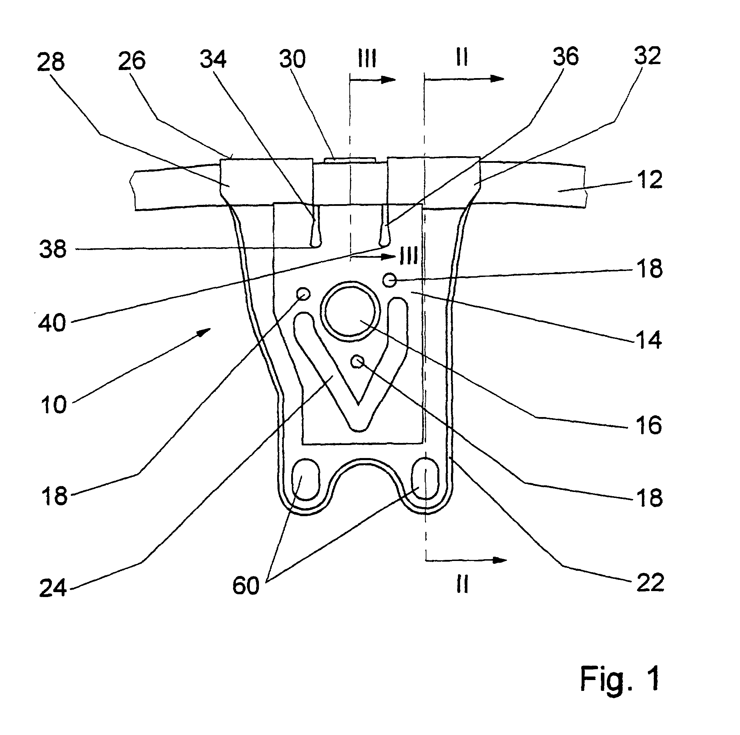

Die Motorplatine 44 nach Fig. 4 unterscheidet sich von der Motorplatine 14 nach Fig. 1 bis 3 dadurch, daß das Platinenrohr 42 und die Lappen 46 und 48 eine achteckige, polygone Querschnittkontur aufweisen. Dadurch wird die Motorplatine 44 formschlüssig mit dem Platinenrohr 42 verbunden. Diese Verbindung kann durch eine Stoffschlußverbindung in den Bereichen 54, 56 unterstützt werden.

### Bezugszeichen

- 10: Rohrplatine
- 12: Platinenrohr
- 14: Motorplatine
- 16: Bohrung
- 18: Schraubenloch
- 20: Vertiefung
- 22: Vertsteifungsrippe
- 24: Sicke
- 26: Seite
- 28: Lappen
- 30: Lappen
- 32: Lappen
- 34: Schlitz
- 36: Schlitz
- 38: Ende
- 40: Ende
- 42: Platinenrohr
- 44: Motorplatine
- 46: Lappen
- 48: Lappen
- 50: Bereich
- 52: Bereich
- 54: Bereich
- 56: Bereich
- 58: gekröpftes Ende
- 60: Langloch

## Patentansprüche

1. Rohrplatine (10) mit einer Motorplatine (14, 44), die längs einer Seite (26) eine Vertiefung (20) besitzt, in der ein Platinenrohr (12, 42) eingebettet und gehalten ist, **dadurch gekennzeichnet, daß** der Rand der Motorplatine (14, 44) im Bereich der Vertiefung (20) und quer zu dieser in Lappen (28, 30, 32, 46, 48) unterteilt ist, die wechselweise das Platinenrohr (12, 42) von der einen und der gegenüberliegenden Seite über einen Teilbereich des Umfangs umfassen.

2. Rohrplatine (10) nach Anspruch 1, **dadurch gekennzeichnet, daß** das Platinenrohr (12) einen kreisförmigen Querschnitt hat und von den Lappen (28, 30, 32) im Bereich etwa eines Halbkreises umfaßt ist.

3. Rohrplatine (10) nach einem der vorhergehenden Ansprüche, **dadurch gekennzeichnet, daß** die Lappen (28, 30, 32, 46, 48) mit dem Platinenrohr (12, 42) stoffschlüssig verbunden sind.

4. Rohrplatine (10) nach einem der vorhergehenden Ansprüche, **dadurch gekennzeichnet, daß** die Motorplatine (14, 44) und das Platinenrohr (12, 42) aus Leichtmetall bestehen und vorzugsweise durch Laserstrahl miteinander verschweißt sind.

5. Rohrplatine (10) nach einem der Ansprüche 1, 3 oder 4, **dadurch gekennzeichnet, daß** das Platinenrohr (42) einen unrunden, vorzugsweise einen polygonen Querschnitt hat und mit der Motorplatine (44) formschlüssig verbunden ist.

6. Rohrplatine (10) nach einem der vorhergehenden Ansprüche, **dadurch gekennzeichnet, daß** sich zwischen den Lappen (28, 30, 32) Schlitze befinden, deren Enden (38, 40) ausgerundet sind.

## Claims

1. Tubular mounting plate (10) with an engine mounting plate (14, 44), which has, along one side (26), a depression (20) in which a mounting-plate tube (12, 42) is embedded and held, **characterized in that** the edge of the engine mounting plate (14, 44) is divided in the region of the depression (20) and transversely with respect to the latter into tabs (28, 30, 32, 46, 48) which surround the mounting-plate tube (12, 42) over a subregion of the circumference in an alternating manner from the one side and from the opposite side.

2. Tubular mounting plate (10) according to Claim 1, **characterized in that** the mounting-plate tube (12) has a circular cross section and is surrounded by the tabs (28, 30, 32) over approximately half the circumference.

3. Tubular mounting plate (10) according to one of the preceding claims, **characterized in that** the tabs (28, 30, 32, 46, 48) are connected to the mounting-plate tube (12, 42) with a cohesive material joint.

4. Tubular mounting plate (10) according to one of the preceding claims, **characterized in that** the engine mounting plate (14, 44) and the mounting-plate tube (12, 42) consist of light metal and are preferably welded to each other by a laser beam.

5. Tubular mounting plate (10) according to one of Claims 1, 3 or 4, **characterized in that** the mounting-plate tube (42) has a non-circular, preferably polygonal cross section and is connected to the engine mounting plate (44) in a form-fitting manner.

6. Tubular mounting plate (10) according to one of the preceding claims, **characterized in that** slots whose ends (38, 40) are rounded out are situated between the tabs (28, 30, 32).

## Revendications

1. Plaque tubulaire (10) avec une plaque de moteur (14, 44), qui possède le long d'un côté (26) une cavité (20) dans laquelle un tube de plaque (12, 42) est logé et maintenu,
**caractérisée en ce que**
le bord de la plaque de moteur ( 14, 44) est divisé, dans la région de la cavité (20) et transversalement à celle-ci, en lamelles (28, 30, 32, 46, 48) qui entourent le tube de plaque (12, 42) alternativement sur un côté et sur le côté opposé, sur une partie de son pourtour.

2. Plaque tubulaire (10) selon la revendication 1
**caractérisée en ce que**
le tube de plaque (12) a une section transversale circulaire et est entouré par les lamelles (28, 30, 32) dans la région d'environ un demi-cercle.

3. Plaque tubulaire (10) selon l'une quelconque des revendications précédentes,
**caractérisée en ce que**
les lamelles (28, 30, 32, 46, 48) sont assemblées en liaison matérielle avec le tube de plaque (12, 42).

4. Plaque tubulaire (10) selon l'une quelconque des revendications précédentes,
**caractérisée en ce que**
la plaque de moteur (14, 44) et le tube de plaque (12, 42) sont constitués de métal léger et sont soudés l'un à l'autre de préférence par un faisceau laser.

5. Plaque tubulaire (10) selon l'une quelconque des revendications 1, 3 ou 4,
**caractérisée en ce que**
le tube de plaque (42) a une section transversale non circulaire, de préférence polygonale, et est assemblée par emboîtement à la plaque de moteur (44).

6. Plaque tubulaire (10) selon l'une quelconque des revendications précédentes,
**caractérisée en ce qu'**
entre les lamelles (28, 30, 32) se trouvent des fentes dont les extrémités (38, 40) sont arrondies.
